# EUROPEAN PATENT APPLICATION

(11) **EP 3 550 545 A1**
(43) Date of publication of application: **09.10.2019**
(21) Application number: 17875097.2
(22) Date of filing: 01.11.2017
(51) Int. Cl.: G09F 19/00, G06F 13/00, G06Q 30/02

(54) **DIGITAL SIGNAGE CONTROL APPARATUS AND DIGITAL SIGNAGE CONTROL PROGRAM**

(30) Priority: 30.11.2016 JP 2016232136
(71) Applicant: Vacan, Inc., Tokyo 162-0824 (JP)
(72) Inventor: KAWANO, Takanobu, Tokyo 162-0824 (JP)
(74) Representative: Clarenbach, Carl-Philipp
(86) International application number: PCT/JP2017/039547
(87) International publication number: WO 2018/100959

(57) **Abstract**

The present invention improves the ability to attract customers to a store by realizing an advertisement suited to the status of the store in real time through use of digital signage. A digital signage control apparatus according to the present invention is for distributing information to be displayed on a digital signage via a network, and has: a storage means for storing special-offer information of the store; a detection means for detecting the level of vacancy of a store facility provided to a user, and a distribution means for distributing, to the digital signage, special-offer information based on the level of vacancy of the store facility, wherein the distribution means distributes special-offer information that is further special if the level of vacancy of the store facility is higher, and the use period of the special-offer information is set shorter if the level of vacancy of the store facility is higher.

## Description

### Technical Field

The present invention relates to a digital signage control apparatus and a digital signage control program.

In recent years, digital signage (Digital Signage) is widely used. Digital signage, in the city, buildings, such as the station, to the installation to display the person conspicuous location, is an electronic sign system that distributes a variety of content such as video and audio in a timely manner. It is also used as an advertising medium for distributing advertising content (see, for example, Patent Documents 1 and 2).

### Background Art

[Patent Document 1] Japanese Laid-open Patent Publication No. 2016 -09 5837
[Patent Document 2] Japanese Laid-open Patent Publication No. 2016-170822

### Disclosure of Invention

### Problem to be Solved by Invention

By the way, conventionally, a scene is often seen in cafes, restaurants, pubs, etc., where the staff distributes flyers and discount tickets near shopfronts in order to fill up the seating area, especially when the shops are open or when there are many vacancies.

Nevertheless, such a conventional advertisement method has a problem that the shop burden is large because it requires preparation of hands, flyers and discount tickets in advance. Also, when it comes to distributing flyers and discount tickets, it depends largely on the judgment of the shop manager, and it tends to be irregular and occasional.

The present invention has been proposed in view of the above-described points, and in one aspect, the present invention aims to realize advertising and advertisement in line with shop conditions in real time by using digital signage, and to improve the ability to attract customers from the shop.

### Means to Solve the Problem

In order to solve the above problems, a digital signage control apparatus according to the present invention is a digital signage control apparatus that distributes information to be displayed on digital signage via a network, and storing means for storing benefit information of a shop; The system comprises: detection means for detecting the number of vacant shop facilities provided to a user; and distribution means for distributing the benefit information according to the number of vacant shop facilities to the digital signage , wherein the distribution means comprises: as said in many cases the number of vacant shop facilities, to distribute the benefits information greater benefit degree, the benefit information is, the greater the number of free of the shop equipment is large, the usage expiration date of the benefit information is set to be shorter.

### Advantage of the Invention

According to the embodiment of the present invention, to achieve the advertising in line with the shop conditions in real time using a digital signage, it is possible to improve ability to attract customers of the shop.

### Brief Description of Drawings

Fig. 1 is a diagram showing a configuration example of a digital signage system according to the present embodiment.
FIG. 2 is a diagram showing an example of a hardware configuration of a control server according to the embodiment.
FIG.3 is a diagram showing an example of the software configuration of a control server according to this embodiment.
FIG. 4 is a diagram showing an example of data of a benefit management DB and a vacancy management DB according to the present embodiment.
FIG. 5 is a diagram showing an example of the shop installation of the monitoring device according to the present embodiment.
FIG. 6 is a view showing an example of a shop information new registration screen according to the embodiment;
FIG. 7 is a diagram showing an example of a seat setting screen according to the present embodiment. FIG. 8 is a view showing an example of a seat detail setting screen according to the embodiment;
FIG. 9 is a diagram showing an example of a benefit registration screen according to the present embodiment.
FIG. 10 is a diagram showing an example of a display screen of digital signage according to the present embodiment.
FIG. 11 is a diagram showing an example of a benefit issue screen of the mobile terminal according to the present embodiment.
FIG.12 is a flowchart showing the process of updating the vacant information control server according to this embodiment.
FIG.13 is a flowchart showing a distribution process of the control server according to this embodiment. FIG.14 is a diagram for explaining an example of a method for determining a discount rate according to the present embodiment.
FIG.15 is a flowchart showing the benefits issue process of the control server according to this embodiment.

### Best Mode for Carrying Out the Invention

Embodiments of the present invention will be described in detail with reference to the drawings.

### < System configuration >

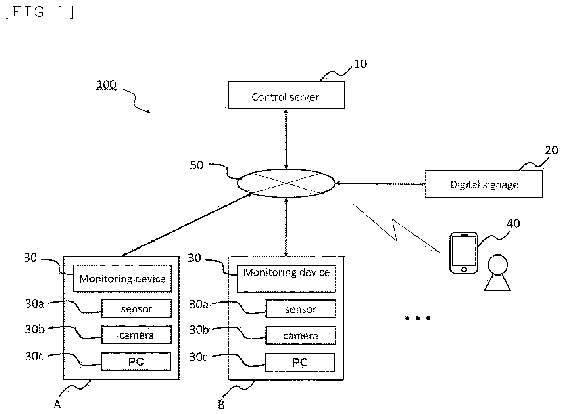

FIG. 1 is a diagram showing an example of the configuration of a digital signage system according to the present embodiment. Digital signage system 100 of FIG. 1, a digital signage control server 10, a digital signage 20, monitoring device 30, and a mobile terminal 40 are connected via a network 50.

Digital signage control server (hereinafter, referred to as control server) 10, the digital signage 20, is a device that distributes various contents, such as shop advertisement and vacancy information. The various contents distributed are displayed on the display of the digital signage 20.

Digital signage 20, outdoor (for example, giant display), shop, building entrance, an image display device such as a liquid crystal display that is installed in a wall. The digital signage 20 is connected to the control server 10 on the cloud via the network 50, and displays distribution information such as shop guidance information, advertisements, vacancy information, and benefit information as a signboard or a poster.

Monitoring device 30 is a device that monitors vacancy information (vacancy status) of a shop etc. It is installed in each monitoring target shop (for example, shop A, shop B, ...). The monitoring device 30 is connected to a vacancy detection device such as a sensor 30a for detecting a human feeling, a camera 30b for analyzing an image of a person, and a PC 30c used when a shop clerk manually inputs setting information and vacancy information. It transmits vacancy information of a monitoring target shop to the control server 10 on the cloud via the network 50.

It is noted that, monitoring device 30, sensors 30a, camera 30b, and / or may be a device integral housing including PC30c. Further, PC30c, for example, a smart phone, a tablet terminal, a mobile phone, a variety of information processing devices including PC (Personal computer).

Mobile terminal 40 is a variety of information processing devices, including smart phones and tablet devices, and the like owned by a user (a customer) of a shop.

Network 50 is a communication network including a wired or wireless. The network 50 includes, for example, the Internet, a public network, WiFi (registered trademark), and the like.

### < Hardware configuration >

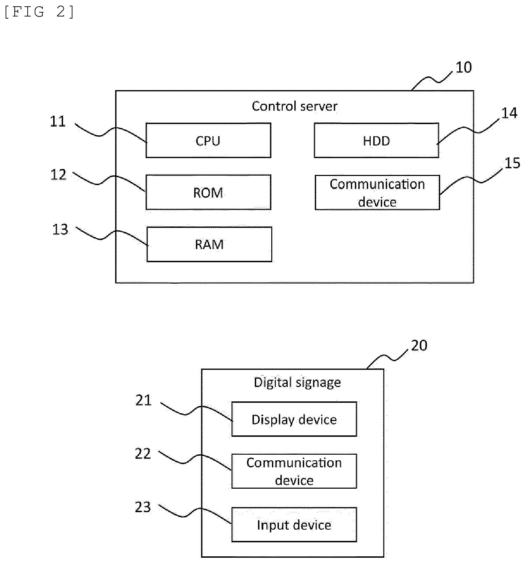

FIG. 2 is a diagram showing an example of the hardware configuration of the control server according to the present embodiment. As shown in FIG. 2, the control server 10 includes a central processing unit (CPU) 11, a read only memory (ROM) 12, a random access memory (RAM) 13, a hard disk drive (HDD) 14, and the communication device 1. with a 5.

The CPU 11 executes various programs and performs arithmetic processing. The ROM 12 stores programs necessary at the time of startup. The RAM 13 is a work area for temporarily storing the processing of the CPU 11 and storing data. The HDD 14 stores various data and programs. The communication device 15 communicates with other devices via the network 50.

Digital signage 20 includes a display device 21, the communication device 22, and an input device 23.

Viewing device 21 includes a liquid crystal displays, plasma displays, LED displays a color display is realized by such. The communication device 22 is a device for performing information communication with an external device. The input device 23 is realized by a unique operation key or button. Incidentally input device 23, instead of the operation keys and buttons may be realized by sensing a touch panel capable tap coordinates on the display screen (touch coordinates). Further, in this case, the input operation is realized by a touch panel on the screen, a software key controlled by a program, and the like.

### < Software configuration >

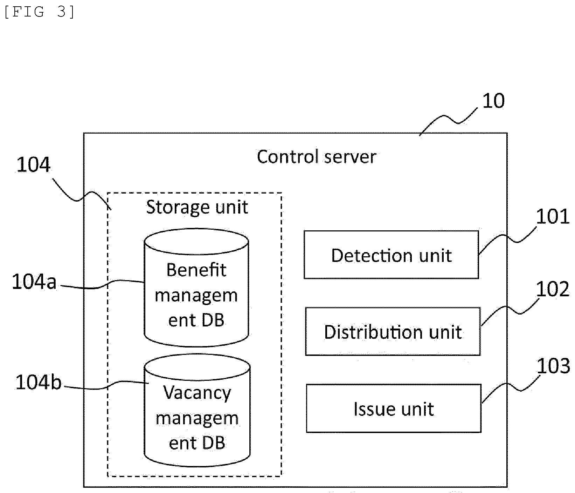

Figure 3 is a diagram showing the software configuration of the control server according to this embodiment. Control server 10 includes, as main functional units, with a detection unit 101, the distribution unit 102, issue unit 103, a storage unit 104.

Detection unit 101 has a function of detecting a number of empty shop equipment to be subjected to the user.

Distribution unit 102, the digital signage 20 has a function of distributing the benefit information corresponding to the number of vacancies of the detected shop equipment by the detection unit 101. For example, the distribution unit 102 distributes the benefit information having a greater degree of benefit, sets the usage expiration date of the benefit information shorter, and so on, as the number of vacant facilities in the shop increases.

Issuing unit 103 issues the benefit information by electronic media in response to a request from the mobile terminal 40 of the user. In addition, control of the number of issues of benefit information (the number of distributions) is also performed.

Storage unit 104 includes benefit management DB (Data Base) 104a, a function of storing vacancy management DB 104b. The benefit management DB 104a is a database storing information on benefits (for example, coupons) used by the shop for customer attraction. The vacancy management DB 104b is a database for managing vacancy information (vacancy status) of a shop in real time.

Contact name functional unit, CPU of the computer constituting the control server 10, in which ROM, a realized by a computer program executed with hardware resources such as a RAM. These functional units may be read as "means", "module", "unit", or "circuit".

### (Advertisement management DB and vacancy management DB)

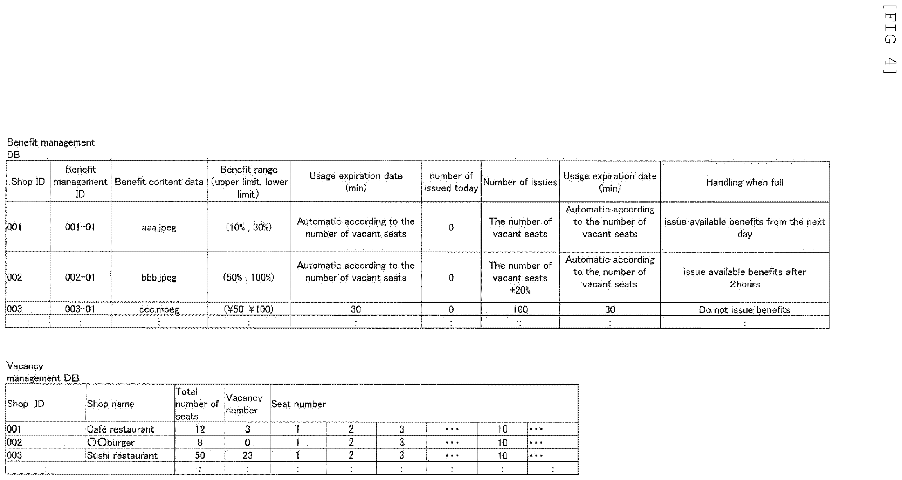

FIG. 4 is a diagram showing an example of data of the benefit management DB 104a and the vacancy management DB 104b according to the present embodiment.

Benefit Management DB 104a is a database shop storing information about the benefits of using the attracting (e.g., a coupon). For example, the benefit management DB 104 a includes "shop ID", "feature management ID", "feature content data", "discount range", "usage expiration date", "number of issued today", "number of issues", "full capacity" It has data items such as "handling".

"Shop ID" indicates a unique identifier numbered for each shop.

"Benefit management ID" indicates a unique identifier numbered for each benefit or campaign implemented by the shop.

"Benefit content data" refers to the data file of the shop benefits to be displayed on the digital signage 20. Coupon information and campaign information are examples of the benefit information.

"Discount range", is displayed on the digital signage, indicating the degree of discount that will be provided to the user. In the "discount range", the degree of discount can be changed according to the availability by specifying the size of the discount benefits, that is, the extent thereof. For example, if the degree of benefit is a discount rate of a product, the "discount range" may be set to 10 to 30%, or if it is a discount amount of the product, the "discount range" may be set to ¥ 50 to ¥ 100.

The "usage expiration date" indicates the usage expiration date (valid date) of the benefit issued to the user and is set by the shop personnel. The setting values include "automatic according to the number of vacancies" and "fixed value".

"The number of issued today" indicates the number of benefits actually issued (distributed) today. It will be counted automatically.

The "number of issues" indicates the number of issued (distributed) benefits issued to the user and is set by the shop personnel. The setting values include "the number of vacancies", "the number of vacancies + α (arbitrary value)", "fixed value (arbitrary value)" and the like. In the present embodiment, the benefits are not issued (distributed) without restriction, and the number of benefits issued to the user is limited.

"Handling when full" refers to the time at which benefits are provided to the user to fully occupied at the time it becomes possible to use. If the shop is full, users can not immediately use the benefits. On the other hand, if there is a vacancy, the benefit is available immediately. The setting values include "Issue available benefits from α (arbitrary value)" and "Do not issue benefits".

Vacancy seat management DB 104b is a database for managing the shop of vacancy information (seat availability) in real-time. The vacancy management DB 104b has data items such as "shop ID", "shop name", "total number of seats", "number of vacancies", and "seat number", for example.

"Shop ID" indicates a unique identifier numbered for each shop.

"Shop name" indicates the name of the shop.

"Total number of seats" indicates the total number of seats in the shop.

"Vacancy number", of the "total number of seats", indicating the number of vacancies. The "number of vacancies" fluctuates in real time according to the availability.

The "seat number" indicates the number of the seat installed in the shop. For example, in the case of a shop having a total of 50 seats, each seat is fixedly registered in "seat number" 1 to 50 in a fixed manner. In addition, the actual availability (status) is managed in real time for each seat. For example, in the case of FIG. 4, a seat whose "seat number" is displayed in bold indicates a non-vacancy state (seated state). Therefore, "the number of vacancies" above is equal to the total sum of the number of seats of the normal display that is not in bold display.

### < Example of installation>

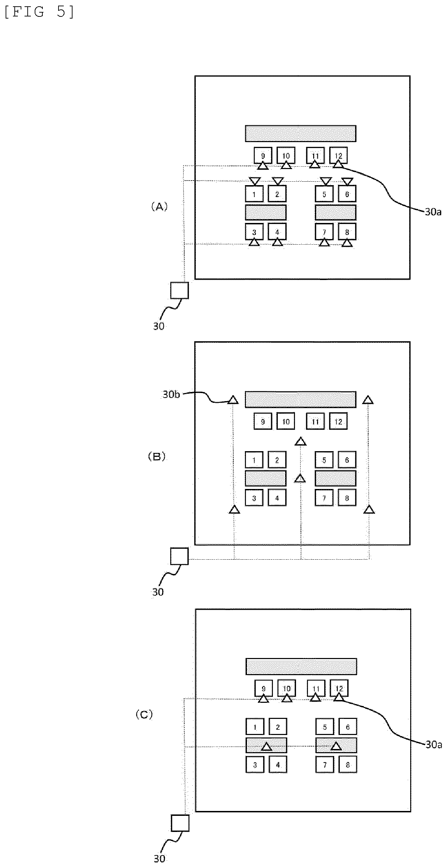

FIG. 5 is a diagram showing an example of the shop installation of the monitoring device according to the present embodiment. The monitoring device 30 is a device that monitors vacancy information (vacancy status) of a shop or the like. Monitoring device 30, Ru is installed anywhere in the shop. The monitoring device 30 is communicably connected to a vacancy detection device such as the sensor 30a, the camera 30b, and the PC 30c via a wireless (or wired) network in the shop.

FIG. 5 (A) shows an example of using the sensor 30a as vacant sensing device. If in FIG. 5 (A), as an example, the shop is provided with a total of 12 seats seat number 1-12, sensor 30a is provided in each seat.

Sensor 30a is installed in each seat to detect the seating of the user. When the monitoring device 30 detects that the seat is in the non-vacant state (that is, the seating state) based on the detection signal of the sensor 30a, the shop ID, the seat number, and the information indicating that the seat is in the non-vacant state, To the control server 10. Further, the sensor 30a detects the absence of the user. When the monitoring device 30 detects that the seat is vacant based on the nondetection signal of the sensor 30a, the monitoring device 30 transmits information indicating that the shop ID, the seat number and the seat are vacant, to the control server 10.

FIG. 5 (B) shows an example of using a camera 30b as vacant sensing device. In the case of FIG. 5 (B), one or more cameras 30b are installed on the shop ceiling or the like. The shop is provided with a total of 12 seats seat number 1-12, the camera 30b is to cover the entire seat in the imaging range.

Camera 30b is imaging the entire seat in real time, the captured image is input one by one to the monitoring device 30. When the monitoring device 30 detects that the seat is in the non-vacant state based on the processing result of the image analysis, the monitoring device 30 transmits information indicating that the shop ID, the seat number, and the seat is in the non-vacant state (that is, the seating state), to the control server 10. Further, when the monitoring device 30 detects that the seat is vacant based on the processing result of the image analysis, it transmits the information indicating the shop ID, the seat number, and that the seat is vacant, to the control server 10 via the network 50.

FIG. 5 (C) shows an example in which the sensor 30a and the camera 30b are used together as a vacant seat detection device. In the case of FIG. 5 (C), the sensor 30a is installed in each seat of the shop, and one or more cameras 30b Are installed on shop ceilings. In addition, the shop is provided with a total of 12 seats with seat numbers 1 to 12. For example, for convenience of a shop or a seat, it is preferable that the camera 30b covers a seat (for example, a table seat) which is more efficient to install the camera 30b.

It is noted that, sensors 30a and with or in combination instead of the camera 30b, PC30c may be used as the vacancy detection device. If you want to use the PC30c, shop personnel to operate the PC30c, enter the vacancy situation was confirmed by visual observation, such as the monitoring device 30. When the seat is input it become the non-vacant state (i.e., seated state) the monitoring device 30 transmits information indicating that the shop ID, the seat number, and the seat are in the non-vacant state, to the control server 10. In addition, when it is input that the seat is vacant, the monitoring device 30 transmits, to the control server 10, the shop ID, the seat number, and information indicating that the seat is vacant.

In addition, when the monitoring device 30 according to the present embodiment is not installed, the sensor 30a, the camera 30b, and the PC 30c is also possible to directly transmit information indicating the shop ID, the seat number, and the seat in non-vacant and vacant states to the control server 10.

Also, the camera 30b of the present embodiment, in order to detect the vacancy of seats on the basis of the image analysis, a single camera 30b is able to detect the vacancy of a plurality of seats. Therefore, for example, when the shop area is narrow, or when all the seats of the shop can be covered in the imaging range by, for example, the camera 30b being an omnidirectional drive type camera, one camera 30b may be installed.

### < Screen >

### (New registration of shop information)

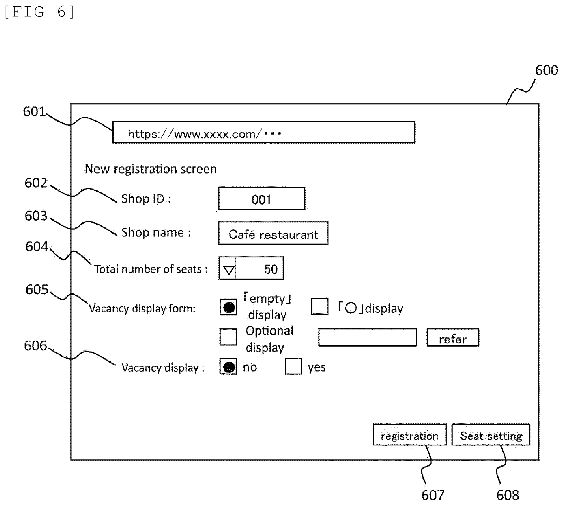

FIG. 6 is a diagram showing an example of a new registration screen of shop information according to the present embodiment. At the beginning, the shop personnel using the PC30c, etc., accesses the new registration screen 600 of the control server 10.

A URL 601 is a field for inputting location information (for example, a domain, an IP address, etc.) of the control server 10.

shop ID 602 shows a unique identifier that is numbered in each shop. The shop ID given in advance from the control server 10 is input or automatically issued to the shop at the time of registration.

Shop name 603 is a field for entering the name of the shop.

The total seat number 604 is a field to enter the total number of seats in the shop.

The vacancy display form 605 is a field for setting the form for displaying vacancy information of a shop on the digital signage 20. For example, when "display empty" is checked, the vacancy display is displayed as "empty". If "Display "○"" is checked, the vacancy display will be displayed as a symbol such as "○", "Δ" or " × ". In addition, when "optional display" is checked, the vacancy display is displayed with any character, symbol or image designated by the shop personnel, such as "available now". The personnel inputs file data of any character, symbol or image.

The vacancy display 606 is a field for setting whether or not to display the remaining number of vacancies when displaying the vacancy information of the shop on the digital signage 20. If "Yes" is checked, the number of remaining seats currently present is displayed on the digital signage 20 together with the vacancies such as "empty" and "○".

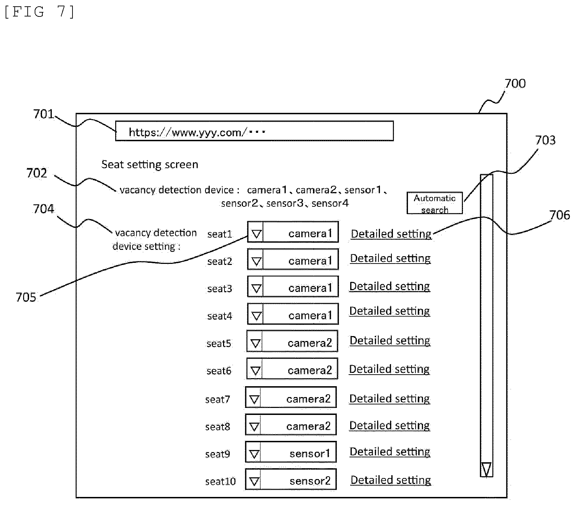

Registration 607 is a registration button for registering the input information.
seat setting 608 is a button to make settings for the seat (see FIG. 7 to be described later).

The following, the input information entered in the new registration screen 600 is stored in the vacant management DB 104b (see FIG. 4).

### (Seat setting)

FIG. 7 is a view showing an example of a seat setting screen according to the present embodiment. Shop personnel, monitoring equipment 30, after the setting of the sensor 30a and the camera 30b, with PC30c, accesses the seat setting screen 700 of monitoring device 30 (or the control server 10). For convenience of description, the seat setting screen 700 of FIG. 7 will be described with reference to the example of FIG. 5 (C).

URL 7 01 is a field for inputting location information of the monitoring device 30.

The vacancy detection device 702 registers the sensor 30a, the camera 30b, and the PC 30c installed in the shop. The vacancy detection device 702 is reflected in a selection field 705 described later.

The automatic detection 703 is a button for automatically detecting the sensor 30a and the camera 30b installed in the shop. When the automatic detection 703 is pressed, the monitoring device 30 searches for the sensor 30a and the camera 30b present in the in-shop network using a predetermined network protocol.

The vacancy detection device setting 704 is a setting field that associates each seat of the shop with each vacancy detection device. For example, the camera 1 is selected from the selection field 705 as a vacancy detection device for detecting vacancy of the seats 1 to 4. The camera 2 is selected from the selection field 705 as a vacancy detection device for detecting vacancy of the seats 5 to 8. Also, as vacancy detection devices for detecting vacancies in the seats 9, 10, 11, 12, the sensors 1, 2, 3, 4 are selected from the selection field 705, respectively.

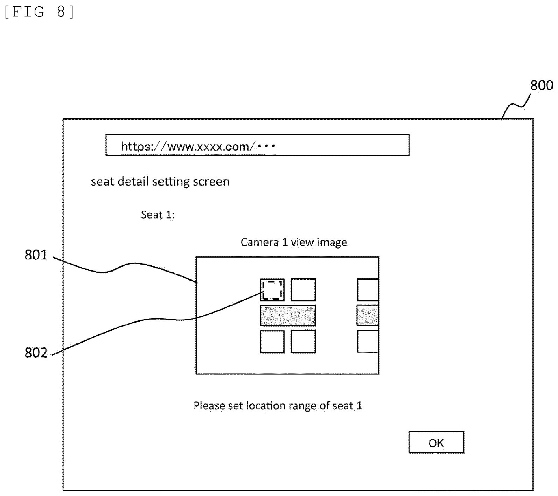

Detailed Settings 706 is a button for performing a detailed setting of the seat detecting device (see FIG. 8 described later).

### (Detailed setting of the seat)

FIG. 8 is a diagram showing an example of a seat detailed setting screen according to the present embodiment. In the seat setting screen 700, when the detailed setting 706 (see FIG. 7) of the seat 1 is pressed, the screen is transited to the seat detailed setting screen 800.

The camera view screen 801 displays a captured image (video) of the camera 1 associated with the seat 1. The administrator specifies a range 802 in which the seat 1 is positioned among the captured images (videos) of the camera 1 with a mouse or the like and presses OK 803.

The camera 30b can detect the availability of a plurality of seats present in one captured image. Here, in the case where a single camera 30b detects a vacancy situation of a plurality of seats, it is necessary to uniquely associate a seat with the "seat number" of the seat in advance. Thus, for example, when the monitoring device 30 detects that the user is seated in the range 802 in the captured image of the camera 1, it detects that the seat 1 is in the non-vacant state (seated state).

### (Benefit setting)

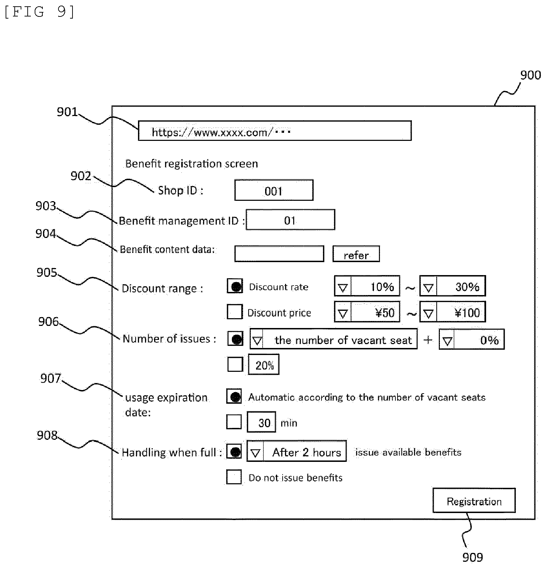

FIG. 9 is a view showing an example of a benefit registration screen according to the present embodiment. The shop personnel accesses the benefit registration screen 900 of the control server 10 using the PC 30c or the like.

A URL 901 is a field for inputting location information (for example, a domain, an IP address, etc.) of the control server 10.

Shop ID 902 is a field for inputting the shop ID to be numbered for each shop.

Benefit Management ID 903 is a field for inputting a unique identifier for managing benefit.

Benefit content data 904 is a field for inputting the data of the benefit content. For example, the person in charge, the shop coupon information (for example, "drink discount coupon") to enter the data of. It should be noted that, of the data files, including still image data, video data, and text data.

Discount range 905 is a field for inputting a value of benefits discount range (lower limit and an upper limit). As the discount range, the shop side can set an arbitrary discount rate or discount amount according to the shop benefit.

For example, if the discount rate is set to 10% to 30%, depending on seat availability, discount rate benefits provided that time varies from 10% to 30%. Then, a benefit to which a larger discount rate is applied as the number of vacancies is increased is displayed on the digital signage 20 so as to be available to the user.

Number issued 906 is a field for inputting the number of benefits issued to the user. The setting values include "the number of vacancies", "the number of vacancies + α (arbitrary value)", "fixed value (arbitrary value)" and the like.

"The number of vacancies" means that the same number of benefits as the number of vacancies at that time is issued. For example, when the number of vacancies is 20, the number of issued benefits (for example, discount coupons) is 20.

"number of vacancies + α (arbitrary value)" means that a benefit for an arbitrary number of values is issued in addition to the number of vacancies. For example, in the case where the number of vacancies is 20, if α is 20%, the number of issues is 24.

Also, "fixed value (arbitrary value)" means that a benefit for the number of arbitrary values is issued. The issue number is "fixed value (arbitrary value)" regardless of the number of vacancies at that time.

Usage expiration date 907 is a field for inputting the usage expiration date of the benefit to be issued to the user (usage expiration date). Settings, "Auto depending on the vacancy number", there is such as "fixed value".

For example, when "automatic according to the number of vacancies" is set, the usage expiration date is shorter as the number of vacancies increases and the usage expiration date is automatically adjusted longer as the number of vacancies decreases, according to the vacancy. In addition, when "fixed value (arbitrary value)" is set, a benefit of the set usage expiration date is issued.

Handling when full 908 is a field for entering a time when the benefit provided to the full capacity user becomes available. If the shop is full, users can not immediately use the benefits. The setting values include "Issue available benefits from α (arbitrary value)" and "Do not issue benefits".

If "Issue benefit available from α (arbitrary value)" is set, the benefit becomes available after a lapse of after α based on the current time at that time. On the other hand, when "do not issue benefit" is set, the benefit is not issued to the user in order to temporarily stop shop attraction when the seat is full.

Registration 909 is a registration button for registering the input information.

The following, the input information entered in the new registration screen 600 is stored in the benefit management DB 104 a (see FIG. 4).

### < Display screen example of digital signage >

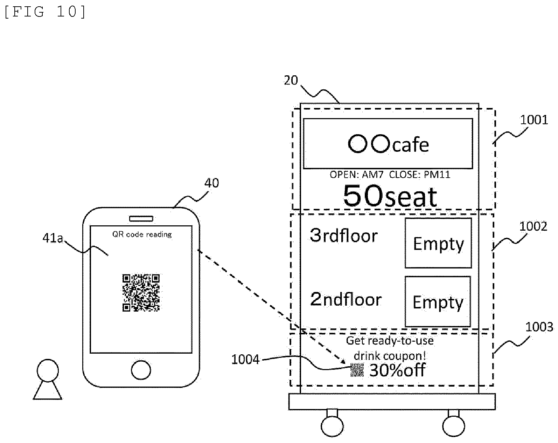

FIG. 10 is a view showing an example of a display screen of digital signage according to the present embodiment. The digital signage 20 shown in FIG. 10 is placed in a position that is easily visible to the user from outside the shop, such as near the entrance of the shop.

On the display screen of the digital signage 20, in the display area 1001, the logo of the store distributed from the control server 10, sales guidance and the like are displayed. By appealing the shop's signboard, the user's interest is kept.

In the display area 1002, vacancy information of the shop distributed from the control server 10 is displayed in a vacancy display form of "empty". By appealing the vacancy situation in real time, it encourages the noticed user to enter the shop right away without waiting.

In the display area 1003, currently available coupon information is displayed as an example of the benefit content data of the shop distributed from the control server 10. For example, as shown in "Get ready-to-use drink coupon! 30% off" and QR code (registered trademark), it is indicated that the benefit is available immediately, a discount rate according to the vacancy situation at that time, and by showing the access code to the coupon site, the user is further prompted to enter now.

The discount rate changes in a certain range (e.g., 10 to 30%) according to the vacancy situation. That is, if there are many vacancies in the shop (as the number of vacancies in the shop is larger), the discount rate of the presented coupon becomes greater, and if there are not many seats available (as the number of vacancies in the in the shop is smaller the discount rate of the coupon presented is reduced.

When selecting a restaurant, some of the users may select the restaurant based on the desire "to immediately enter the shop", "whether or not there is a seat", and "do not want to wait".

The user is interested by the signboard of the shop of the digital signage 20, and it can be seen that the shop has vacancies at a glance. Therefore, since the user can be seated immediately after entering the shop without waiting, the user can enter the shop with confidence. The user never would have the experience of not having a seat (could not enter because it was full) when the user tried to go into the shop with the user's feet.

In this way, when there is a vacancy, the shop side wants to fill the seat more aggressively as there are more vacancies, but by displaying the vacancy information in real time on the digital signage 20, the shop can appeal effectively that the user is able to enter the shop without waiting.

In addition, if there are many vacancies in the shop side and the shop side want to fill in the vacancies even in the time zone, and if there are many vacancies in the shop, coupon information with a large discount rate is displayed, so It is possible to encourage users to enter the shop strongly and fill vacancies.

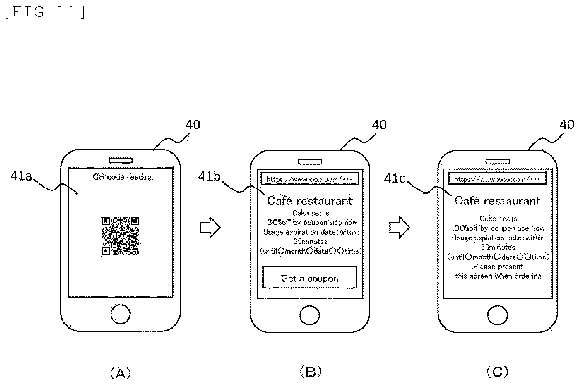

FIG. 11 is a diagram showing an example of the benefit issue screen of the mobile terminal according to the present embodiment. The mobile terminal 40 is a smartphone possessed by a shop user (customer).

The user uses the mobile terminal 40 to read the QR code (registered trademark) displayed on the digital signage 20 (FIG. 11 (A)). In the QR code (registered trademark), the URL of the control server 10, the shop ID, and the benefit information, etc. are encoded and embedded, and the information is acquired via the application of the QR code (registered trademark).

Next to this, When the mobile terminal 40 accesses the control server 10 on the cloud via the network 50 based on the above information, coupon information is displayed on the mobile terminal 40(FIG. 11 (B)).

And when the user presses the "get a coupon", on the screen a coupon ticket is issued (Fig. 11 (C)). The user present the coupon tickets displayed on the mobile terminal 40 to the shop, it is possible to obtain the benefits such as discounts, etc.

### < Information processing >

Information processing of the control server according to the present embodiment will be described.

### (Update processing of vacancy information)

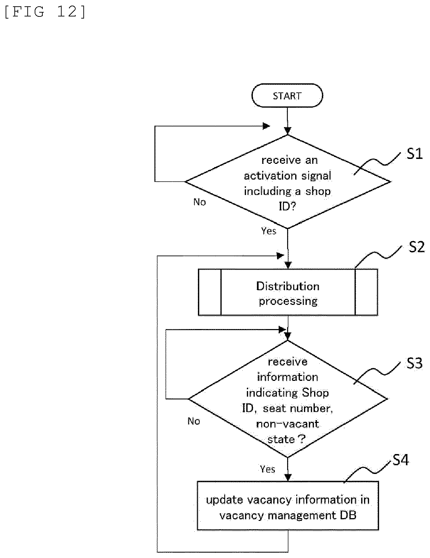

Fig. 12 is present in the embodiment according the control server of the vacancy information updating is a flowchart showing the process.

S 1: The control server 10 determines whether or not an activation signal including a shop ID has been received from the monitoring device 30c. The monitoring device 30 transmits a start signal including the shop ID to the control server 10 at the time of start.

S 2: control server 10 executes a distribution processing. The distribution processing is a process of distributing a shop sign, vacancy information, benefit information, and the like. The distribution processing will be described later (see FIG. 12).

S 3: The control server 10 determines whether or not the shop ID, the seat number, and the information indicating that the seat is in the non-vacant state are received from the monitoring device 30.

S 4: The control server 10 updates the vacancy information based on the information of S3. That is, in the shop identified by the shop ID, the vacancy situation (status) of the seat identified by the seat number is changed from the vacancy state to the non-vacancy state (for example, "seat number" in FIG. 4 is displayed in bold). As described above, when the monitoring device 30 detects that the seat is in the non-vacant state based on the detection signal of the vacancy detection device, the shop ID, the seat number, and the information indicating that the seat is in the non-vacant state are sent to the control server 10.

Next to this, it proceeds again to S2, corresponding to the vacant updated information distribution processing is executed.

### (Distribution processing)

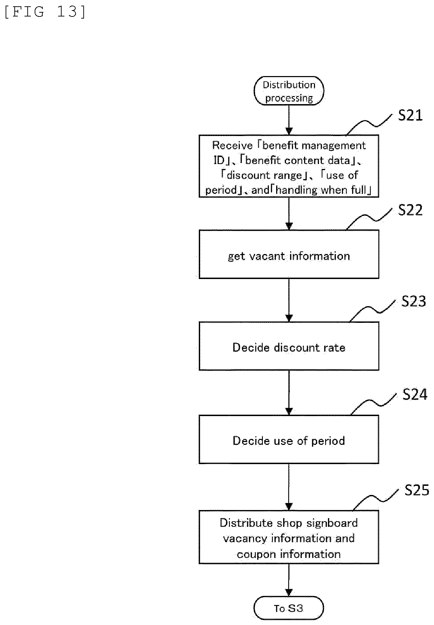

FIG. 13 is a flowchart showing the distribution processing of the control server according to the present embodiment. The distribution unit 102 executes this distribution processing.

S 21: control server 10, benefits management DB 104a refer to, based on the shop ID, "benefit management ID", "benefit content data", "discount range", "use-by date", the "treatment at the time of full house." benefits information to retrieve.

S22: control server 10 refers to vacancy management DB 104b and acquires vacancy information of "the total number of seats" and "vacancy number".

S23: Next, the control server 10 determines the discount rate of the benefit (for example, coupon) to be presented to the user according to the number of vacancies in the shop. That is, the larger the number of vacancies in the shop, the larger the discount rate, and the smaller the number of vacancies in the shop, the smaller the discount rate.

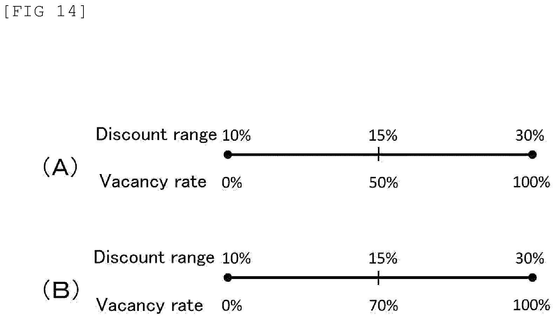

As an example of the determination method, first, since the weight of the number of vacancies is different depending on the shop size, the "number of vacancy" is divided by the "total number of seat" to calculate the vacancy rate. Then, the minimum value of the "discount range" can be made to correspond to the vacancy rate of 0% and the maximum value to 100%, and the value of the "discount range" corresponding to the vacancy rate can be determined as the discount rate (FIG. See A). For example, if the discount range is 10% to 30%, the discount rate is 15% when the vacancy rate is 25%, 25% when the vacancy rate is 50%, 25% when the vacancy rate is 75%, When the vacancy rate is 100%, the discount rate is 30%. It should be noted that the vacancy rates corresponding to the "discount range" do not have to be evenly distributed. For example, the higher the vacancy rate, the greater the degree of the discount rate may be biased (see FIG. 14B).

S24: Next, the control server 10 determines the usage expiration date of the benefit (for example, coupon) to be presented to the user according to the number of vacancies in the shop. That is, when the setting value of "usage expiration date" acquired in S21 is "automatic according to the number of vacancies", the usage expiration date is determined to be shorter as the number of vacancies in the shop is larger, and the usage expiration date is determined to be longer as the number of vacancies in the shop is smaller. If the shop wants to fill in vacancies as soon as there are many vacancies, by shortening the usage expiration date of the benefit, users can be prompted to enter immediately.

In addition, in consideration of the convenience on the shop side, the range of the usage expiration date may be held in advance by the control server 10 in a predetermined range period, such as 30 minutes (short usage time) to 2 hours (longest usage date). However, it is also possible for the shop side to adopt an appropriate value according to the rule of thumb, etc. as to how much the specific usage expiration date is to be made, and the minimum usage time is, for example, 10 minutes, and the maximum usage expiration date is such as today It can also be determined. The control server 10 determines an usage expiration date according to the number of vacancies of the shop from the range of the usage expiration date given in advance in this manner.

On the contrary, acquired in S21 set value is a fixed value of "usage expiration date" (e.g., 30 minutes) if that is the, the fixed may follow the value.

S25: Next, the control server 10, the digital signage 20 distributes shop signboard, vacancy information, and the coupon information (see FIG. 10).

Specifically, as for the signboard of the shop, an image or a video of the signboard specified by the shop may be distributed. The vacancy information is distributed in a form according to the vacancy display form 605 based on the vacancy information acquired in S22 (FIG. 6). Further, the coupon information includes "benefit content data" and the discount rate determined in S23, the URL of the control server 10, "benefit management ID" (or shop ID), and the discount rate determined in S23, it is distributed as a QR code (registered trademark) in which the information with the usage expiration date determined in S24 is embedded.

In S23, when there is no vacancy based on the vacancy information acquired in S22 (in the case of full seat), the discount rate of the minimum value of the "discount range" is determined in S23, and the longest term of use is determined in S24. Further, coupon information is issued according to the "handling when full" acquired in S21. For example, in the case of "issuing a usable benefit from the next day", "a drink coupon Get! Usable from the next day" may be displayed in the display area 1003 of FIG. If the user visits the shop right away at the time of full occupancy, waiting for vacancies will occur, and as a shop side, it is not necessary to attract customers right now.

Also, information embedded in the QR code (registered trademark) is merely an example, it is sufficient if the user can read it by the mobile terminal 40 and finally issue a coupon.

### (Benefit issue processing)

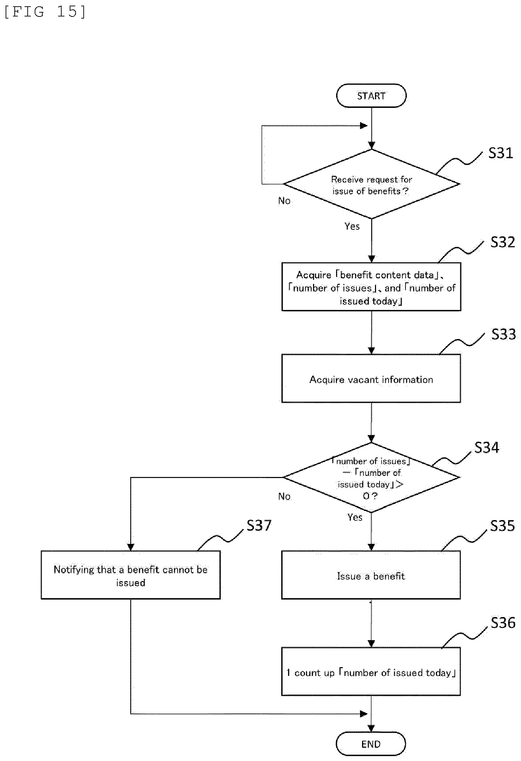

FIG. 15 is a flowchart showing the benefit issuing process of the control server according to the present embodiment. This benefit issue process, issuing portion 103 is executed.

S31: The control server 10 determines whether a request for issuing a benefit has been received from the mobile terminal 40 or not. If it has been received, the processing proceeds to S32. The issue request includes information on a benefit management ID (or shop ID) embedded in the QR code (registered trademark), a discount rate, and an usage expiration date.

S32: control server 10 refers to the benefit management DB 104a and acquires benefit information of "benefit content data", "number of issues", "the number of issued today" based on the benefit management ID (or shop ID).

S33: control server 10 refer to vacancy management DB 104b and acquires the vacancy information of the "number of vacancies".

S34: control server 10, determines whether {"issue number" - "Today number of issued"> 0} is established. If it is established the process proceeds to S35. If not, the process proceeds to S 37.

Here, with respect to the "number of issues," as shown in FIG. 4, when the setting value is "the number of vacancies", the value of the "number of vacancies" acquired in S33 is input. Further, for example, in the case of "the number of vacancies + 20%", the value of {"the number of vacancies" + "the number of vacancies" × 0.2} acquired in S33 is input.

Then, if the value obtained by subtracting the value of "number of issued today" from the value of "number of issued" is the current available number, and the current available number is a positive number, the current available number still remains. That is, the benefit can be issued. On the other hand, when the currently available number is not a positive number, the currently available number is not left, that is, the benefit issue is impossible.

Since the store side intends to fill out the current vacancies by issuing a reward corresponding to the number of vacancies (for example, a coupon ticket), the number of rewards issued is determined based on the current number of vacancies, Specifically, a bonus equal to the number of vacancies or the number of vacancies + α is issued. That is, when the current number of vacancies is large, the number of issues is large, and when the number of vacancies is small, the number of issues is small. Thus, for example, if the current number of vacancies is 30, the number of issued benefits (for example, coupon coupons) is 30 or 30 + alpha., For example, if the number of currently available seats is 5, the number of issued benefits is, 5 or 5 + α sheets.

In addition, when the number of issued benefits is unlimited, there is a possibility that the seats with vacancies will be fully occupied immediately by the benefit effect, and the customer satisfaction of the users who could not enter the shop may decrease

The reason for subtracting "the number of issued today" from the "number of issued" is to consider the possibility that the already issued benefit is used. For example, if ten coupons have already been issued at the vacancy 40 at the vacancy 30, the number of coupons to be issued (distributed) at the vacant seat 30 is 20 (= 30-10). It is calculated that the vacancy 30 is filled by using a total of 30 coupons of the 10 previously issued sheets and the 20 currently available coupons at the time of the previously vacancy 30.

S 35: The control server 10 issues a benefit. Specifically, a screen of a benefit ticket including "benefit content data", a discount rate, an usage expiration date, and the like is generated and transmitted to the mobile terminal 40 (see FIG. 11C) .

S 36: control server 10 counts up the "the number of issued today", and update benefits management DB 104a.

S 37: The control server 10 notifies that the benefit cannot be issued. For example, a screen such as "Distribution of coupons has ended" can be generated and transmitted to the mobile terminal 40.

### < Summary >

As described above, the digital signage control apparatus 10 according to the present embodiment distributes benefit information according to the number of vacant seats in a store, and distributes, to the digital signage 20, benefit information having a larger benefit degree as the number of vacancies increases. As a result, if there are many vacancies on the shop side or if you want to fill in the vacancies even in the time zone, and if there are many vacancies in the shop, the benefit information with a large discount rate is displayed. It is possible to strongly and positively enter the shop and fill up vacancies.

That is, according to the digital signage system 100 according to the present embodiment, it is possible to realize advertising in real time according to the shop situation using digital signage, and to improve the ability to attract customers from the shop.

It is noted that, the present invention has been described in terms of specific embodiments and in accordance with the preferred embodiments of the invention, those embodiments may be practiced without departing from the broad spirit and scope of the invention as defined in the appended claims. Obviously, various modifications and variations can be made to the example. That is, the present invention should not be construed as being limited by the details of the specific examples and the attached figures.

For example, the equipment provided to the user such as a shop is not limited to only the seat of the shop according to the present embodiment and may be any equipment having a limited number available to the user. For example, it may be a private room of a restaurant, a karaoke box, a manga cafe seat, a loan product, a game machine of a game arcade, or the like.

Also, the degree of benefit according to the present embodiment is not necessarily limited to the discount rate. For example, in the case of a plurality of free offerings, it is possible to set free drinks, free French fries, free hamburgers gradually, etc., so that the degree of benefits felt by the user is increased. That is, if there are many vacancies in the shop (the more vacancies in the shop), free hamburgers are presented, and if there are not many vacancies (the fewer vacancies in the shop), the free drinks are presented.

In addition, the digital signage system 100, the digital signage control server 10, and the digital signage 20 according to the present embodiment are, for example, dynamic signage, interactive signage, narrow casting, video delivery, audio delivery, digital POP, digital signature. , digital billboards, digital display signage, digital content distribution systems, electronic POPs, electronic posters, electronic boards, electronic information boards, electronic displays, electronic signboard systems, electronic bulletin boards, electronic advertising boards, and the like.

### Description of Reference Symbols

10 Digital Signage Control Server
20 Digital Signage
30 Monitoring Device
40 Mobile Terminal
50 Network
100 Digital Signage System
101 Detection Unit
102 Distribution Unit
103 Issue Unit
104 Storage Unit

## Claims

1. A digital signage control apparatus for distributing information to be displayed on a digital signage via a network, the digital signage control apparatus comprising:
a storage unit configured to store benefit information of a shop;
a detection unit configured to detect a vacant number of shop facilities to be provided to a user; and
a distribution unit configured to distribute the benefit information in accordance to the vacant number of the shop facilities to the digital signage,
wherein the distribution unit distributes the benefit information whose degree of benefit become greater as the vacant number of the shop facilities becomes greater, and
wherein the distribution unit distributes the benefit information whose degree of benefit becomes greater as the vacant number of the shop facilities becomes greater, and
the benefit information has an expiration date thereof which is set to be shorter as the number of vacant number in the shop facilities increases.

2. A digital signage control apparatus for distributing information to be displayed on a digital signage via a network, the digital signage control apparatus comprising:
a storage unit configured to store benefit information of a shop;
a detection unit configured to detect a vacant number of shop facilities to be provided to a user; and
a distribution unit configured to distribute the benefit information in accordance to the vacant number of the shop facilities to the digital signage,
wherein the distribution unit distributes the benefit information whose degree of benefit become greater as the vacant number of the shop facilities becomes greater, and
wherein the distribution unit distributes the benefit information whose degree of benefit becomes greater as the vacant number of the shop facilities becomes greater, and
an issue number of items of the benefit information is set to be greater as the number of vacancies in the shop facilities increases.

3. A digital signage control apparatus for distributing information to be displayed on a digital signage via a network, the digital signage control apparatus comprising:
a storage unit configured to store benefit information of a shop;
a detection unit configured to detect a vacant number of shop facilities to be provided to a user; and
a distribution unit configured to distribute the benefit information in accordance to the vacant number of the shop facilities to the digital signage,
wherein the distribution unit distributes the benefit information whose degree of benefit become greater as the vacant number of the shop facilities becomes greater, and
wherein the distribution unit distributes the benefit information whose degree of benefit becomes greater as the vacant number of the shop facilities becomes greater, and
the distribution unit distributes benefit information that can be used from the future in the shop when the vacant number of the shop facilities is 0.

4. A digital signage control program that causes a digital signage control apparatus, which digital signage control apparatus is configured to distribute information to be displayed on a digital signage via a network, to functions as:
a storage unit configured to store benefit information of a shop;
a detection unit configured to detect a vacant number of shop facilities to be provided to a user; and
a distribution unit configured to distribute the benefit information in accordance to the vacant number of the shop facilities to the digital signage,
wherein the distribution unit distributes the benefit information whose degree of benefit become greater as the vacant number of the shop facilities becomes greater, and
wherein the distribution unit distributes the benefit information whose degree of benefit becomes greater as the vacant number of the shop facilities becomes greater, and
an issue number of items of the benefit information is set to be greater as the number of vacant number in the shop facilities increases.

5. A digital signage control program that causes a digital signage control apparatus, which digital signage control apparatus is configured to distribute information to be displayed on a digital signage via a network, to functions as:
a storage unit configured to store benefit information of a shop;
a detection unit configured to detect a vacant number of shop facilities to be provided to a user; and
a distribution unit configured to distribute the benefit information in accordance to the vacant number of the shop facilities to the digital signage,
wherein the distribution unit distributes the benefit information whose degree of benefit become greater as the vacant number of the shop facilities becomes greater, and
wherein the distribution unit distributes the benefit information whose degree of benefit becomes greater as the vacant number of the shop facilities becomes greater, and
the benefit information has an expiration date thereof which is set to be shorter as the number of vacancies in the shop facilities increases.

6. A digital signage control program that causes a digital signage control apparatus, which digital signage control apparatus is configured to distribute information to be displayed on a digital signage via a network, to functions as:
a storage unit configured to store benefit information of a shop;
a detection unit configured to detect a vacant number of shop facilities to be provided to a user; and
a distribution unit configured to distribute the benefit information in accordance to the vacant number of the shop facilities to the digital signage,
wherein the distribution unit distributes the benefit information whose degree of benefit become greater as the vacant number of the shop facilities becomes greater, and
wherein the distribution unit distributes the benefit information whose degree of benefit becomes greater as the vacant number of the shop facilities becomes greater, and
the distribution unit distributes benefit information that can be used from the future in the shop when the vacant number of the shop facilities is 0.
